# EUROPEAN PATENT APPLICATION

(11) **EP 1 439 206 A2**
(43) Date of publication of application: **21.07.2004**
(21) Application number: 03029664.4
(22) Date of filing: 23.12.2003
(51) Int. Cl.: C08K 5/16

(54) **Stabilizer composition**

(30) Priority: 14.01.2003 CN 03101672
(71) Applicant: Everlight USA, Inc., Pineville, NC 26134 (US)
(72) Inventor: Lee, Chung-In, 328 Taoyuan (TW); Chiu, Ming Ho, 328 Taoyuan (TW)
(74) Representative: Bublak, Wolfgang, Dr.

(57) **Abstract**

A stabilizer composition which includes (a) a UV absorber of foramidine derivative, (b) a UV absorber of benzotriazole derivative, and (c) an antioxidant is disclosed. The stabilizer composition disclosed here are suitable for improving the stabilization of the organic polymers to against the degradation by light.

## Description

### BACKGROUND OF THE INVENTION

### 1. Field of the invention

The present invention relates to a stabilizer composition, and particularly to a stabilizer composition suitable for being added to organic polymers to improve discoloration caused by light. The present invention is particularly suitable for being applied to polyurethane (PU).

### 2. Related Prior Art

Near UV radiation is well known regarding its damage to organic materials, particularly to organic polymer materials. When lighted by UV, these materials easily become yellow, age and worsen, and thus the physical properties thereof are reduced. For example, the PU soles of shoes apparently become yellow when exhibited in show windows and lighted by the sun.

Currently, one solution to solve the above problem is to add stabilizers in the organic polymers, whereby color, gloss, transparence, shape and physical properties such as impact resistance, anti-tension strength thereof can be maintained when explored outdoors.

References regarding stabilizer compositions are very plentiful, for example, USP. No. 4,929,652, and 5,037,870, 5,705,083, EP. No. 290,388A, 468,923A, and 690,094, etc. However, demands for better stabilizer compositions, particularly for those adapted to PU with better resistance to discoloration, are continuously increased. Therefore, it is desirable to provide an improved stabilizer composition to mitigate and/or obviate the aforementioned problems.

### SUMMARY OF THE INVENTION

The object of the present invention is to provide a stabilizer composition, which is suitable for being added in organic polymer to improve discoloration caused by light.

The stabilizer composition of the present invention primarily includes a UV absorber of foramidine derivative, a UV absorber of benzotriazole derivative, and an antioxidant.

The stabilizer composition of the present invention is particularly suitable for improving discoloration of PU material.

In this specification, tests to the specimens are carried out according to ASTM D1148. An instrument PT-2030A of Hi Sun Instrument Co, Ltd. and a 300W UV light source are applied for 12 hours and 24 hours. Yellowness Index (YI) according to ASTM E313 is used to adjudge discoloration degree of the specimens. In the following examples, a higher YI of the specimen indicates more serious discoloration thereof. A less difference between YI before and after illumination of one specimen indicates better discoloration resistance thereof. Basically, longer test time, for example, 24 hours, will result in larger YI than shorter test time, for example, 12 hours.

### DETAILED DESCRIPTION OF THE INVENTION

The stabilizer composition of the present invention is suitable for being added in organic polymers to improve discoloration caused by light.

The stabilizer composition primarily includes a UV absorber of foramidine derivative, a UV absorber of benzotriazole derivative, and an antioxidant. Other additives can be arbitrarily added optionally.

In this composition, the UV absorber of foramidine derivative is a compound of the formula (I): 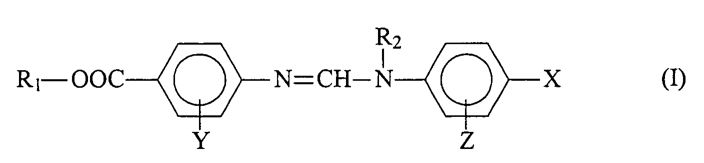 wherein R₁ is alkyl group of C₁-C₅; Y is hydrogen, hydroxyl group, chlorine or alkoxy group; R₂ is phenyl group or alkyl group of C₁-C₉; X is hydrogen, alkoxycarbonyl group, alkoxy group, alkyl group, bis alkyl amine, or halogen; Z is hydrogen, alkoxy group, or halogen.

The UV absorber of foramidine derivatives in the composition of the present invention can be prepared according to traditional methods as mentioned in US Pat. No. 4,021,471 and 4,085,062.

In the stabilizer composition of the present invention, the preferred UV absorber of foramidine derivative includes N'-(4-ethoxycarbonylphenyl) -N-methyl-N-phenylformamidine, N'-(4-ethoxycarbonylphenyl)-N- ethyl-N-phenylformamidine, N'-(4-ethoxycarbonylphenyl)-N-(4-methoxyphenyl)-N-methyl formamidine, N,N'-Bis(4-ethoxycarbonyl phenyl)-N-methylformamidine, N-(4-dimethylaminophenyl)-N'-(4-ethoxy-carbonylphenyl)-N-methylformamidine, N'-(4-ethoxy carbonylphenyl)-N-(2-methoxyphenyl)-N-methylformamidine, N'-(4-ethoxycarbonylphenyl)-N-(3,4-dichloro phenyl)-N-methylformamidine, N-(4-butoxycarbonylphenyl)-N'-(4-ethoxycarbonylphenyl)-N-methylformamidine, N'-(4-butoxycarbonyl phenyl)-N-methyl-N-phenyl formamidine, N'-(3-hydroxy-4-methoxy carbonylphenyl)-N-methyl-N-phenylformamidine, N-butyl-N-phenyl- N'-(4-ethoxycarbonylphenyl)formamidine, N'-(4-ethoxycarbonyl phenyl)-N-(n-octyl)-N-phenylformamidine, N,N-diphenyl-N'-(4-ethoxy carbonylphenyl)formamidine, N'-(4-ethoxycarbonyl-3- methoxyphenyl)-N'-methyl-N-phenylformamidine, N'-(4-isopropoxy carbonylphenyl)-N-methyl-N-phenylformamidine, N'-(4-ethoxy carbonylphenyl)-N-methyl-N-(p-ethylophenylformamidine) , N'-(2-Chloro-4-methoxycarbonylphenyl)-N-methyl-N-phenyl formamidine, or mixtures thereof.

In the stabilizer composition of the present invention, the particularly preferred UV absorber of foramidine derivative includes N'-(4-ethoxy carbonyl phenyl)-N-methyl-N-phenylformamidine, N'-(4-ethoxy carbonylphenyl)-N-ethyl-N-phenylformamidine, or a mixture thereof.

In the present invention, the UV absorber of foramidine derivative is usually added at 5-90 wt.%; and preferably at 10-70 wt.%.

In the composition of the present invention, the UV absorber of benzotriazole derivative can be at least one of 2-(2'-hydroxy-5'-methyl phenyl)-benzotriazole, 2-(3',5'-di-tert-butyl-2'-hydroxyphenyl) benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro- benzotriazole, 2-(3'-sec-butyl-5'-tert-butyl-2'-hydroxyphenyl) benzotriazole, 2-(2'-hydroxy-4'-octyloxyphenyl)benzotriazole, 2-(3',5'-di-tert-amyl- 2'-hydroxyphenyl)benzotriazole, 2-(3',5'-bis-(α,α-dimethylbenzyl)- 2'-hydroxyphenyl) benzotriazole, 2-(3'-tert-butyl-2'-hydroxy-5'- (2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)- 5-chloro-benzotriazole, 2-(3'-tert-butyl-2'-hydroxy-5'-(2-methoxy carbonylethyl)phenyl)-5-chloro-benzotriazole, 2-(3'-tert-butyl-2'- hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2'-ethylhexyloxy)carbonylethyl]-2'- hydroxyphenyl)benzotriazole, 2-(2H-benzotriazol-2-yl)-6-dodecyl-4- methylphenol, branched and linear, α-[3-[3-(2H-Benzotriazol-2-yl)- 5-1,1-dimethylethyl]-4-hydroxyphenyl]-1-oxopropyl]-ω-hydroxypoly (oxo-1,2-ethanediyl) and α-[3-[3-(2H-Benzotriazol-2-yl)-5-1,1- dimethylethyl]-4-hydroxyphenyl]-1-oxopropyl]-ω-[3-[3- (2H-Benzotriazol-2-yl)-5-1,1-dimethylethyl]-4-hydroxyphenyl]-1-oxopropyl]poly(oxy-1,2-ethanediyl) and polyethylene glycol 300, 2-(3'-dodecyl-2'-hydroxy-5'-methylphenyl) benzotriazole, 2-(3'-tert- butyl-2'-hydroxy-5'-(2-isooctyloxycarbonylethyl)phenylbenzotriazole), and mixtures of 2,2'-methylene-bis-[4-(1,1,3,3-tetramethylbutyl)-6-benzotriazole-2-ylphenol]; esters of 2-[3'-tert-butyl-5'-(2-methoxy carbonylethyl)-2'-hydroxyphenyl]-2H-benzotriazole and polyethylene glycol 300, [R-CH2CH2-COO-CH2CH2-]2-, wherein R=3'-tert-butyl- 4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]benzotriazole, and 2-[2'-hydroxy-3'-(1,1,3,3-tetramethylbutyl)-5'-(α,α-dimephenyl) benzotriazole].

In the stabilizer composition of the present invention, the preferred UV absorber of benzotriazole derivative includes 2-(2'-hydroxy-5'-methylphenyl)-benzotriazole, 2-(2'-hydroxy-5'-(1,1,3,3-tetramethyl butyl)phenyl)benzotriazole, 2-(3'-sec-butyl-5'-tert-butyl-2'-hydroxyphenyl)benzotriazole, α-[3-[3-(2H-Benzotriazol-2-yl) -5-1,1-dimethylethyl]-4-hydroxyphenyl]-1-oxopropyl]-ω -hydroxy poly(oxo-1,2-ethanediyl) and α-[3-[3-(2H- Benzotriazol-2-yl)- 5-1,1-dimethylethyl]-4-hydroxyphenyl]-1- oxopropyl]-ω-[3-[3-(2H-Benzotriazol-2-yl)-5-1,1-dirnethylethyl]-4-hydroxyphenyl]-1-oxopropyl]poly(oxy-1,2-ethanediyl) and polyethylene glycol 300, 2-(2H-benzotriazol-2-yl)-6-dodecyl-4-methylphenol, branched and linear, or mixtures thereof.

The particularly preferred UV absorber of benzotriazole derivative includes 2-(3',5'-di- tert-amyl-2'-hydroxyphenyl)benzotriazole, 2-(2'-hydroxy-5'-methylphenyl)-benzotriazole, and 2-(3'-sec-butyl-5'- tert-butyl-2'-hydroxyphenyl)benzotriazole.

In the present invention, the UV absorber of benzotriazole derivative is usually added at 5-90 wt.%; and preferably at 10-70 wt.%.

In the stabilizer composition of the present invention, the antioxidant includes phenol derivative or phosphorus derivative, and can be n-otadecyl 3-(3,5-di-t-butyl-4-hydroxyphenyl)-propionate, n-octadecyl 2-(3,5-di-t-butyl-4-hydroxyphenyl)-acetate, n-octadecyl 3,5-di-t-butyl-4-hydroxybenzoate, n-hexyl 3,5-di-t-butyl-4-hydroxy phenylbenzoate, n-dodecyl 3, 5-di-t-butyl-4-hydroxyphenylbenzoate, neo-dodecyl 3-(3,5-di-t-butyl-4-hydroxyphenyl)propionate, dodecyl β-(3,5-di-t-butyl-4-hydroxyphenyl)propionate, ethyl α-(4-hydroxy- 3,5-di-t-butylphenyl)-isobutyrate, octadecyl α-(4-hydroxy-3,5-di-t- butylphenyl) isobutyrate, octadecyl α-(4-hydroxy-3,5-di-t-butylphenyl) propionate, 2-(n-octylthio)ethyl 3,5-di-t-butyl-4-hydroxy benzoate, 2-(n-octylthio)ethyl 3,5-di-t-butyl-4-hydroxy phenylacetate, 2-(n-octadecylthio)ethyl 3,5-di-t-butyl-4-hy droxyphenylacetate, 2-(n-octadecylthio)ethyl 3,5-di-t-butyl-4-hydroxy benzoate, 2-(2-hydroxyethylthio)ethyl 3,5-di-t-butyl-4-hydroxybenzoate, diethyl glycol bis-(3,5-di-t-butyl-4-hydroxy-phenyl)propionate, 2-(n-octadecylthio)ethyl 3-(3,5-di-t-butyl-4-hydroxyphenyl)propionate, stearamido n,n--bis-[ethylene 3-(3,5-di-t-butyl-4-hydroxyphenyl) propionate], n-butylimino n,n--bis-[ethylene 3-(3,5-di-t-butyl- 4-hydroxyphenyl)propionate], 2-(2-stearoyloxyethylthio)ethyl 3,5-di-t-butyl-4-hydroxybenzoate, 2-(2-stearoyloxyethylthio)ethyl-7- (3-methyl-5-t-butyl-4-hydroxyphenyl)heptanoate, 2,6-di-t-butyl-4- methyl phenol, 3,9-bis2-[3-(3-t-butyl-4-hydroxy-5-methyl-phenyl) propionyloxy]-1,1-dimethylethyl]-2,4,8,10-tetra oxaspiro[5,5]undecane, 1,2-propylene glycol bis-[3-(3,5-di-t-butyl-4- hydroxyphenyl) propionate], ethylene glycol bis-[3-(3,5-di-t-butyl-4- hydroxyphenyl) propionate], neopentylglycol bis-[3-(3,5-di-t-butyl-4-hydroxyphenyl) propionate], ethylene glycol bis-(3,5-di-t-butyl-4-hydroxy - phenylacetate), glycerine-1-n-octadecanoate-2,3-bis-(3,5-di-t-butyl- 4-hydroxyphenylacetate), pentaethylthritol-tetrakis-[3-(3',5'-di-t-butyl- 4'-hydroxyphenyl)propionate], 1,1,1-trimethylol ethane-tris-3- (3,5-di-t-butyl-4- hydroxyphenyl)propionate, sorbitol hexa-[3-(3,5-di-t- butyl-4-hydroxyphenyl)propionate], 2-hydroxyethyl 7-(3-methyl-5-t- butyl-4-hydroxyphenyl)heptanoate, 2-stearoyloxyethyl 7-(3-methyl- 5-t-butyl-4-hydroxyphenyl)heptanoate, 1,6-n-hexanediol-bis[(3',5'-di-t- butyl-4-hydroxyphenyl)-propionate], pentaerythritol-tetrakis(3,5-di-tert- butyl-4-hydroxy hydrocinnamate), benzenepropanoic acid, 3,5-bis(1,1-dimethylethyl)-4-hydroxy-,C₇₋₉-branched alkyl esters, tri-phenyl phosphite, trisnonyl phenol phosphite, diphenyl isodecyl phosphite, phenyl di-isodecyl phosphite, tri-isodecyl phosphite, tri-2-ethyl-hexyl phosphite, di-phenyl nonylphenyl phosphite, tri-nonylphenyl phosphite, tri(2,4-di-t-butylphenyl)phosphite, bis(2,6-di-t-butyl-4-methyl phenyl) pentaerythrytolphosphite, 2,2-methylenebis(4,6-di-t-butylphenyl) octylphosphite, or mixtures thereof.

The preferred antioxidant includes benzenepropanoic acid, 3,5-bis(1,1-dimethylethyl)-4-hydroxy-,C₇₋₉-branched alkyl esters, 3,9-bis2-[3-(3-t-butyl-4-hydroxy-5-methyl-phenyl)propionyloxy]-1,1-dimethylethyl]-2,4,8,10-tetra oxaspiro[5,5]undecane, 2,6-di-t-butyl- 4-methyl phenol, tri-phenyl phosphite, or mixtures thereof; wherein benzenepropanoic acid, 3,5-bis(1,1-dimethylethyl)-4-hydroxy-,C₇₋₉- branched alkyl esters, tri-phenyl phosphite, or mixtures therof are particularly preferred.

In the present invention, the antioxidant is usually added at 5-90 wt.%; and preferably at 10-70 wt.%.

Additionally, other additives can be optionally added, for example, solvents, other antioxidants, other UV absorbers, other UV stabilizers, metal deactivators, phosphites, phosphates, hydroxylammonium, nitrone, thiosynergists, peroxide cleaner, thermal stabilizers, nucleating agent, fillers, reinforecer, plasticizer, lubricants, emulsifier, paints, dyes, reological additives, fire-retardant, antielectrostatic agent, foaming agent, benzofuranones, and indolinones.

Types and amounts of the additives are determined according to the substrates and usage thereof. In general, the additives can be added in an amount about 0-50 wt.%.

In the present invention, the additives is used to prevent from damage caused by light, and usually in an amount about 0.01-10 wt.% of the total polymers.

In the present invention, the main components of the stabilizer composition, the UV absorber of foramidine derivative, the UV absorber of benzotriazole derivative and the antioxidant, can be mixed with traditional procedures to form a mixture or a dispersion solution. A better procedure is to add solid components into liquid components, and preferably to heat the liquid components previously. Furthermore, in order to prevent crystal dialysis, the solution is continuously heated or re-heated. Timing for adding the additives is not restrictedly limited.

The composition or individual components can be added into the organic polymers with traditional methods, for example, before or during molding. Solvents can be removed, if necessary. The individual components of the composition of the present invention can be added in the form of powders, particles or masterbatches containing these components, in which the components are usually 1-25% by weight.

If necessary, the components can be previously melted and mixed each other.

These components also can be added before or during polymerization of the organic material or before crosslinking.

The stabilized material can be applied in any form, for example, thin films, fibers, strips, molded compositions, or adhesive or glue for coating.

The stabilizer composition of the present invention is particularly suitable for improving organic polymer material as follows:
1) polymer of alkene and alkadiene, for example, polypropylene (PP), polyisobutylene , poly-but-1-ene, poly-4-methylpent-1-ene, polyisopenten or polybutadiene, and polymer of cyclic alkenes, for example, cyclic pentene or norbomene, other polyethylene (PE) (uncrosslinking or crosslinking), for example, high density polyethylene (HDPE), HDPE-high-molecular-weight (HDPE-HMW), HDPE-ultrahigh-molecular-weight (HDPE-UHMW), medium density polyethylene (MDPE), low density polyethylene (LDPE), linear-LDPE (LLDPE), and branch-LDPE (BLDPE);
2) mixtures of the polymers described in 1), for exmple, polypropylene/polyisobutylene mixture, polypropylene/polyethylene (for example, PP/HDPE, PP/LDPPE), and mixtures of PE in various types (for example, LDPE/HDPE);
3) copolymer of alkene and alkadiene, or copolymers of other ethylene monomers, for example, ethylene/propylene copolymer, LLDPE and mixtures thereof and LDPE, propylene /but-1-ene copolymer , propylene/isobutene copolymer, ethylene/but-1-ene copolymer, ethylene/hexene copolymer , ethylene/methylpentene copolymer , ethylene/heptene copolymer , ethylene/octene copolymer , propylene /butadiene copolymer , isobetene/isoprene copolymer , ethylene/alkyl aclylate copolymer , and copolymers thereof with monoxide , or ethylene/acrylate copolymer , and salts thereof (ion compounds) and trimer of ethylene and propylene and a diene, for example, hexadiene, dicyclopentadiene or ethyldiene- norbomene; and mixtures of the copolymers and mixtures of the polymers described in 1), for example, polypropylene-ethylene-propylene copolymer, LDPE-ethylene-vinyl acetate copolymer (EVA), LDPE-ethylene-acrylate copolymer (EAA), LLDPE-ethylene-vinyl acetate copolymer, LLDPE-ethylene-acrylate copolymer and polyalkylene-carbon monoxide copolymer with a disorder structure, and mixtures thereof with other polymers, for example, polyamide;
4) resin of hydrocarbon (for example, C₅-C₉), including modified hydrogenized compounds thereof (for example, glue), and mixtures of polyolefin and starch;
5) polystyrene, poly(p-methyl styrene), poly(α-methyl styrene);
6) copolymer of styrene or α-methyl styrene and diene or acrylate derivatives, for example, styrene/butadiene, styrene/acrylnitrile, styrene/alkyl methacrylate, styrene/butadiene/alkyl aclylate, styrene/butadiene/alkyl methacrylate, styrene/maleic anhydride, styrene/acrylnitrile/m ethyl acrylate; high-impact-strength mixtures of styrene copolymers, and another polymer, for example, polyaclylate, a diene polymer, or an ethylene/ propylene/ diene trimer; and block copolymers of styrene , for example, styrene/ butadiene/ styrene, styrene/isoprenylene/ styrene, styrene/ ethylene/ butene/ styrene, or styrene/ethylene/ propylene/ styrene;
7) grafted copolymers of styrene or α-methyl styrene , for example, styrene of polybutadiene, styreneof poly butadiene-styrene or polybutadiene-acrylnitrile copolymer; styrene and acrylnitrile (or methyl acrylnitrile) of polybutadiene; styrene, acrylnitrile and methyl methacrylate of polybutadiene; styrene and maleic anhydride of polybutadiene; styrene, acrylnitrile and maleic anhydride or cis-butenediimide of polybutadiene; styrene and cis-butenediimide of polybutadiene; styrene and alkyl acrylic resin or methacrylate of polybutadiene; styrene and acrylnitrile of ethylene/propylene/ diene trimer; styrene and acrylnitrile of poly(alkyl acrylic resin) or poly(alkyl methacrylate); styrene and acrylnitrile of aclylate/ butadiene copolymer, and mixtures with copolymer described in 6), for example, copolymer mixtures of ABS, MBS, ASA, or AES;
8) polymer including halogen, for example, polychloroprencompoylene, chlorinated rubber, chlorinated or vulcanized PE, ethylene and chlorinated ethylene copolymer, epichlorohydrin homopolymer and copolymer, particularly copolymer of ethyl compounds including halogen, for example, polyvinyl chloride, polyvinylidene chloride, polyvinyl fluoride, polyvinylidene fluoride, and copolymers thereof, for example, vinyl chloride/vinylidene chloride, vinyl chloride/vinyl acetate, or vinylidene chloride/vinyl acetate copolymer;
9) polymer of α,β-unsaturated acid and derivatives thereof, for example, polyaclylate and polymethacrylate; poly(methyl methacrylate), polyacrylamide and polyacrylnitrile, those modified with butyl acrylate;
10) copolymer of monomers described in 9) and other unsaturated monomers, for example, acrylnitrile/ butadiene copolymer , acrylnitrile/alkyl aclylic resin copolymer , acrylnitrile/ alkoxy alkyl aclylic resin or acrylnitrile/ imide halogenated copolymer or acrylnitrile/ alkyl m ethacrylate/ butadiene trimer;
11) polymer of unsaturated alcohol and amine derivatives or acylated derivative thereof or acetal thereof, for example, Poly vinyl alcohol, poly Vinyl acetate, polyvinyl stearate, polyvinyl benzoate, polyvinyl maleic acid ester, polyvinyl butyral, polyolefin propyl phthalate, or polyolefin propyl melamine; and copolymers of olefin described in 1);
12) homopolymer and copolymer of cyclic ether, for example, polyolefin diol, polyvinyl oxide, polypropylene oxide, or copolymer thereof with bisglycidyl ethers;
13) polyacetal, for example, poly-methylene glycol and the like including vinyl oxide as comonomers, and polyacetal modified with thermoplastic polyurethane, aclylate or MBS;
14) polyphenylene oxide and sulfide, and mixture of poly(phenylene vinylene) and styrene polymer or polyamide;
15) those with polyurethane, polyester or polybutadiene derived from polyether of the end of hydroxyl group on one side thereof, and aliphatic or aromatic polyisocynate on the other side thereof, and precursors thereof;
16) copolymer derived from polyamide and diamine and dicarboxylic acid and/or aminocarboxylic acid or the corresponding lactamase, for example, polyamide 4, polyamide 6, polyamide 6/6, 6/10, 6/9, 6/12, 4/6, 12/12, polyamide 11, polyamide 12, and aromatic polyamide initialized with m-m-xylene diamine and adipic acid; polyamide derived from hexamethylene-bis-triacetone diamine and isophthalic acid and/or p-phthalic acid derivatives, which have or have not elastomer as modifiers, for example, poly-2,4,4-trimethyl hexamethylene p-phthalamide or poly-m-phenyl vinyl isophthalamide; and copolymer of polyamide and polyolefin described above, olefin, ionic compound, or bonded or grafted with elstomers; or block copolymer of polyether such as polyethylene glycol, polypropylene diol or poly(tetramethylene gly-col); and polyamide or copolyamide modified with EPDM or ABS; and polyamide concentrated during preparation (RIM polyamide system);
17) polyurea, polyimide, polyamide-imide and polyphenyl imidazolum;
18) polyester derived from dicarboxylic acid and diol and/or hydroxyl carboxylic acid or the corresponding lactone, for example, polyvinyl p-phthalate, polybutylene p-phthalate, poly-1,4-cyclohexane-dimethanol p-phthalate and polyhydroxy benzoic acid ester, and block copolyetherester derived from polyether with hydroxyl end; and polyester modified with polycarbonate or MBS;
19) polycarbonate and polyester carbonate;
20) polysulfone, poly(ether sulfone) and poly(ether ketone);
21) crosslinking polymer derived by compounds with aldehyde on one side and with phenol, urea and melamine on the other side, for example, phenol/formaldehyde resin, urea/formaldehyde resin, and melamine/formaldehyde resin;
22) dried and nondried alkyd resin;
23) saturated and unsaturated dicarboxylic acid and polyhydrogenase and unsaturated polyester resin derivative with vinyl compound as crosslinking agent, and low flamable modified compound containing halogen;
24) crosslinking resin of acrylate obtained by substituted acrylate derivative, for example, epoxyacrylate resin, urethaneacrylate resin or polyesteracrylate resin;
25) crosslinking acrylate resin, urea resin, polyisocynate or epoxyresin of alkyd resin, polyester resin and melamine resin;
26) crosslinking epoxy resin derived from aliphatic, cyclic aliphatic, heterocyclic or aromatic glycidyl compound, for example, product of bisglycidyl ethers of bisphenol A and bisphenol F, which can be crosslinked with traditional hardening agents such as anhydride or amine (in existence of an enhancer or not);
27) natural polymer, for example, cellulose, rubber, gelatin and chemically-modified derivatives thereof, for example, cellulose acetate, cellulose acrylate and cellulose butyrate, or cellulose ether such as methyl cellulose; and turpentine and derivatives thereof; and
28) mixtures or poly-mixtures of the above polymers, for example, PP/EPDA, polyamide/EPDM or ABS, PVC/EVA, PVC/ABS, PVC/MBS, PC/ABS, PBTP/ABS, PC/ASA, PC/PBT, PVC/CPE, PVC/aclylate, POM/thermoplastic PUR, PC/thermoplastic PUR, POM/aclylate, POM/MBS, PPO/HIPS, PPO/PA6.6 and copolymer, PA/HDPE, PA/PP, PA/PPO, PBT/PC/ABS, or PBT/PET/PC.

The stabilizer composition of the present invention can be added in organic polymers, and particularly in PU.

By adding the stabilizer composition of the present invention, the polymer can have better resistance to light, particularly to UV. Therefore, the mechanical properties, color and gloss are satisfied even after explored outdoors for long time.

### DETAILED DESCRIPTION OF THE PREFERRED EMBODIMENTS

In the following Examples, parts and percentages are measured by weight except additional instruction.

Tests to the specimens are carried out according to ASTM D1148. An instrument PT-2030A of Hi Sun Instrument Co, Ltd. and a 300W UV light source are applied for 12 hours and 24 hours. Yellowness Index (YI) according to ASTM E313 is used to adjudge discoloration degree. In the following examples, a higher YI of the specimen indicates more serious discoloration thereof. A less difference between YI before and after illumination of the specimen indicates better discoloration resistance thereof. Basically, longer test time, for example, 24 hours, will result in larger YI than shorter test time, for example, 12 hours.

In order to be easily read, some of compounds used in the examples are briefly represented by the following code name.

### 1. UV absorber of foramidine derivative

| Code Name | Compound |
|---|---|
| a-1 | N'-(4-Ethoxycarbonylphenyl)-N-methyl-N -phenylformamidine |

### 2. UV absorber of benzotriazole derivative

| Code Name | Compound |
|---|---|
| b-1 | 2-(2'-hydroxy-5'-methylphenyl)- benzotriazole |
| b-2 | 2-(2'-hydroxy-5'-(1,1,3,3-tetramethylbutyl)phenyl)benzotriazole |
| b-3 | 2-(3',5'-di-tert-amyl-2'-hydroxyphenyl)benzotriazole |
| b-4 | 2-(3'-sec-butyl-5'-tert-butyl-2'-hydroxyphenyl)benzotriazole |
| b-5 | 2-(2H-benzotriazol-2-yl)-6-dodecyl-4-methylphenol,branched and linear |
| b-6 | α-[3-[3-(2H-Benzotriazol-2-yl)-5-1,1-dimethylethyl]-4-hydroxyphenyl]-1-oxopropyl-ω-hydroxypoly(oxo-1,2-ethanediyl) and α-[3-[3-(2H-Benzotriazol-2-yl)-5-1,1-dimethylethyl]-4-hydroxyphenyl]-1-oxopropyl-ω-[3-[3-(2H-Benzotriazol-2-yl)-5-1,1-dimethylethyl]-4-hydroxyphenyl]-1-oxopropyl poly(oxy-1,2-ethanediyl) and polyethylene glycol 300 |

### 3. Antioxidant

| Code Name | Compound |
|---|---|
| c-1 | Benzenepropanoic acid, 3,5-bis(1,1-dimethylethyl)-4-hydroxy-,C₇₋₉-branched alkyl esters |
| c-2 | Tri-phenyl phosphite |
| c-3 | 2,6-di-t-butyl-4-methyl phenol |
| c-4 | 3,9-bis2-[3-(3-t-butyl-4-hydroxy-5-methyl-phenyl)propionyloxy]-1,1-dimethylethyl]-2,4,8,10-tetra oxaspiro[5,5]undecane |

### 4. Traditional stabilizer

| Code Name | Compound |
|---|---|
| d | Bis(1,2,2,6,6-pentamethyl-4-piperidyl)sebacate and methyl 1,2,2,6,6-pentamethyl-4- piperidyl sebacate |

### Comparative Example 1 Preparation of the traditional stabilizer composition

As listed in Table I, 4 parts of compound d, 1 part of compound b-3 and 5 parts of compound c-2 are mixed and heated to 70-80□ with stirring until the composition is completely liquidized.

### Comparative Example 2

Repeat procedures of Comparative Example 1, but replace with 2 parts of compound d, 2 parts of compound b-5 and 1 part of compound c-1 as listed in Table I.

The stabilizer compositions of Comparative Example 1 and 2 will be applied to PU foam specimens and then brought to the test. Test results are listed in Table II.

### Example 1 Preparation of the stabilizer composition in accordance with the present invention

As listed in Table I, 1 part of compound b-3, 4 part of compound a-1 and 1 part of compound c-1 are mixed and heated to 70-80□ with stirring until the mixture is completely liquidized.

### Examples 2-9

Repeat procedures of Example 1, but replace with components as listed in Table I.

**Table I**

| Stabilizer Composition | Component | | | | | |
|---|---|---|---|---|---|---|
| | b-3 | a-1 | c-1 | D | b-5 | c-2 |
| Comparative | 1 | | | 4 | | 5 |
| Example 1 | | | | | | |
| Comparative Example 2 | | | 1 | 2 | 2 | |
| Example 1 | 1 | 4 | 1 | | | |
| Example 2 | 1 | 4 | 3 | | | |
| Example 3 | 1 | 5 | 4 | | | |
| Example 4 | 1 | 4 | 5 | | | |
| Example 5 | 1 | 3 | 4 | | | |
| Example 6 | 1 | 5 | 3 | | | 1 |
| Example 7 | 1 | 4 | 4 | | | 1 |
| Example 8 | 1 | 3 | 3 | | | 1 |
| Example 9 | 1 | 4 | 2.5 | | | 0.5 |

The above stabilizer compositions of Comparative Examples 1-2 and Examples 1-9 are brought to test according to the following procedures:

### Discoloration Tests for PU Foam Specimens

### 1. Preparation of the PU foam specimens

### 1.1 Formula for the PU foam

| Material | Specification | Supplier | Amount (g) |
|---|---|---|---|
| Long-chain Alcohol | PPG3000 | Young Sun | 36 |
| Toluene Diisocyanate | TDI-80 | Young Sun | 18 |
| Diamine Catalyst | 33LV | Ya Chung | 0.07 |
| Organic Tin Catalyst | T-9 | Ya Chung | 0.14 |
| Foam Finishing Agent | L-580 | Ya Chung | 0.72 |
| Foaming Aagent | Distillation water | | 1.44 |
| Stabilizer Composition | One of Comparative Examples 1-2, and Examples 1-9 | | 0.54 |

### 1.2 Operation Procedures

1.2.1 Providing two 300ml stainless steel beakers (A, B).
1.2.2 Placing TDI-80 (18g) in beaker A, and PPG3000 (36g) in beaker B.
1.2.3 Adding 33LV (0.07g), T-9 (0.14g), L-580 (0.72g), distillation water (1.44g) and the stabilizer composition (0.54g) into beaker B in sequence.
1.2.4 Mixing the compounds in beaker B with a rotator at 3000rpm for 30 sec and then stopping mixing.
1.2.5 Pouring TDI-80 of beaker A into beaker B and mixing the mixture at 3000rpm for 10 sec, then stopping mixing, and rapidly pouring the mixture into a mold (60mm long/30mm wide/3mm high).
1.2.6 Leaving the mold for 12hr at room temperature, and then take out the PU foam.
1.2.7 Pressing the PU foam in a plane thermal presser, PLAYSTAT 200T of Schwabenthan Co., at 200 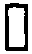 , 300 Bar for 50 sec.

### 2. Test results of the (b-2) PU foam specimens after illuminated for 12 hours

According to ASTM D1148, the above PU foam specimens are placed in a test instrument, PT-2030A of Hi Sun Instrument Co, Ltd., and illuminated with 300W UV light source for 12 hours. The measured Yellowness Indexes (YI) are used to determine the discoloration degree according to ASTM E313.

Before and after illuminate for 12 hours, the YI of a blank PU specimen without mixing with the stabilizer composition are 10.91 and 45.02, and the variation is 34.11. The YI of the PU specimen mixing with the composition of Comparative Example 1 are 6.2 and 39.58, and the variation is 33.38, which are listed in Table II. The YI of the PU specimen mixing with the composition of Example 1 are 12.89 and 25.13, and the variation is 12.24, as listed in Table II. Other test results are also listed in Table II.

**Table II**

| | YI Before Illuminated | YI Aafter Illuminated for 12 Hours | Variation of YI |
|---|---|---|---|
| Blank | 10.91 | 45.02 | 34.11 |
| Comparative Example 1 | 6.2 | 39.58 | 33.38 |
| Comparative Example 2 | 10.2 | 31.06 | 20.86 |
| Example 1 | 12.89 | 25.13 | 12.24 |
| Example 2 | 9.98 | 24.98 | 15 |
| Example 3 | 10.48 | 24.2 | 13.72 |
| Example 4 | 11.06 | 28.77 | 17.71 |
| Example 5 | 11.82 | 30.18 | 18.36 |
| Example 6 | 10.85 | 28.27 | 17.42 |
| Example 7 | 9.07 | 25.89 | 16.82 |
| Example 8 | 8.17 | 24.25 | 16.08 |
| Example 9 | 8.28 | 25.15 | 16.87 |

As listed in Table II, the stabilizer compositions obtained in Examples 1-9 have less YI variations, 12.24-18.36, than the Blank specimen, 34.11. Additionally, the test results of Examples in accordance with the present invention are better than those of the traditional compositions, Comparative Examples 1-2. Apparently, the stabilizer compositions of the present invention can improve resistance to discoloration of the PU foam.

### Comparative Example 3 Preparation of the traditional stabilizer composition

1 parts of compound d and 1 part of compound a-1 are mixed and heated to 70-80□ with stirring until the composition is completely liquidized. The composition is listed in Table III.

### Comparative Examples 4-7

Repeat procedures of Comparative Example 3, but replace with different components as listed in Table III.

### Example 10 Preparation of the stabilizer composition in accordance with the present invention

1 part of compound b-1, 2 part of compound a-1,1 part of compound c-2 and 1 part of compound c-4 are mixed and heated to 70-80□ with stirring until the mixture is completely liquidized. The composition is listed in Table III.

### Examples 11-13

Repeat procedures of Example 10, but replace with different components as listed in Table III.

**Table III**

| | Component | | | | | |
|---|---|---|---|---|---|---|
| | b-1 | d | a-1 | c-2 | c-3 | c-4 |
| Comparative Example 3 | | 1 | 1 | | | |
| Comparative Example 4 | | 1 | 1 | | 1 | |
| Comparative Example 5 | | 3 | 2 | 2 | | |
| Comparative Example 6 | | 2 | 3 | | 1 | |
| Comparative Example 7 | | 2 | 2 | | | 1 |
| Example 10 | 1 | | 2 | 1 | | 1 |
| Example 11 | 1 | | 3 | 1 | | 1 |
| Example 12 | 1 | | 2 | 1 | 1 | |
| Example 13 | 1 | | 3 | 1 | 1 | |

The stabilizer compositions of Comparative Examples 3-7 and Examples 10-13 are brought to the test according to the following procedures.

### Discoloration Test of TPU (Thermoplastic Polyurethane)

### 1. Preparation of TPU specimens

### 1.1 Formula for TPU

| Material | Specification | Supplier | Amount (g) |
|---|---|---|---|
| TPU Particle | AVALON 95AE | Huntsman | 980 |
| TPU Color Masterbatch | White masterbatch | Huntsman | 20 |
| Stabilizer Composition | One of Comparative Examples 3-7, and Examples 10-13 | | 10 |

### 1.2 Equipment

injection molding machine-Chen Hsong
mold temperature machine-Taiwan Electric Heating Equipment

### 1.3 Operation Procedures

1.3.1 Conditions of equipment
1.3.1.1 mold temperature machine: 30±1□
1.3.1.2 injection molding machine:

| Nozzle | T1 | T2 | T3 | T4 (loading port) |
|---|---|---|---|---|
| 190□ | 190□ | 200□ | 200□ | 150□ |

1.3.2 Drying the TPU particle in an oven at 85±1□ for 3hr.
1.3.3 Mixing the TPU particles, TPU color masterbatch and stabilizer composition of (a) according to the above formula for 3 min.
1.3.4 Molding the mixture in the injection molding machine according to the conditions in 2.3.1, and obtaining plane specimens of 75mm long/50mm wide/3 mm high.

### 2. Test results of TPU specimens after illuminated for 12 hours

According to ASTM D1148, the above TPU specimens are placed in the test instrument, PT-2030A of Hi Sun Instrument Co, Ltd., and illuminated with 300W UV light source for 12 hours. The Yellowness Index (YI) is used to determine the discoloration degree according to ASTM E313.

Before and after illuminated for 12 hours, the YI of a blank TPU specimen without mixing with the stabilizer composition are -7.34 and 11.89, and the variation is 19.23. The YI of the TPU specimen mixing with the composition of Comparative Example 3 are -8.79 and 0.12, and the variation is 8.91, as listed in Table IV. The YI of the TPU specimen mixing with the composition of Example 10 are -3.17 and -0.86, and the variation is 2.31, as listed in Table IV. Other test results are also listed in Table IV.

**Table IV**

| | YI Before Illuminated | YI After Illuminated for 12 Hours | Variation of YI |
|---|---|---|---|
| Blank | -7.34 | 11.89 | 19.23 |
| Comparative Example 3 | - 8.79 | 0.12 | 8.91 |
| Comparative Example 4 | - 7.05 | 1.42 | 8.47 |
| Comparative Example 5 | - 9.65 | -2.02 | 7.63 |
| Comparative Example 6 | - 8.82 | 0.72 | 9.54 |
| Comparative Example 7 | - 8.13 | 0.91 | 9.04 |
| Example 10 | -3.17 | -0.86 | 2.31 |
| Example 11 | -7.3 | -3.82 | 3.48 |
| Example 12 | -4.22 | -0.51 | 3.71 |
| Example 13 | -6.53 | -1.99 | 4.54 |

The test results of Examples 10-13 listed in Table IV indicate that the YI variations of the composition in accordance with the present invention, 2.31-4.54, are very less than that of the blank specimen, 19.23, and Comparative Examples 3-7. That is, the stabilizer compositions of the present invention show better resistance to discoloration of the TPU.

### Examples 14-35

Repeat procedures of Example 10, but replace with different components as listed in Table V.

**Table V**

| | Component | | | | | | | | | |
|---|---|---|---|---|---|---|---|---|---|---|
| | b-1 | b-2 | b-3 | b-4 | a-1 | c-2 | c-3 | c-4 | c-1 | b-6 |
| Example 14 | 1 | | | | 2 | 1 | | 1 | | |
| Example 15 | 1 | | | | 3 | 1 | | 1 | | |
| Example 16 | 1 | | | | 2 | 1 | 1 | | | |
| Example 17 | 1 | | | | 3 | 1 | 1 | | | |
| Example 18 | 1 | | | | 3 | 1 | | | 1 | |
| Example 19 | | 1 | | | 3 | 1 | | | 1 | |
| Example 20 | | | 1 | | 3 | 1 | | | 1 | |
| Example 21 | | 1 | | | 3 | 1 | | 1 | | |
| Example 22 | | | 1 | | 3 | 1 | | 1 | | |
| Example 23 | | | 1 | | 3 | | | | 2 | |
| Example 24 | | | 1 | | 5 | | | | 4 | |
| Example 25 | | | 1 | | 6 | | | | 3 | |
| Example 26 | | | 1 | | 4 | | | | 1 | |
| Example 27 | | | 1 | | 5 | | | | 2 | |
| Example 28 | | | 1 | | 4 | | | | 3 | |
| Example 29 | | | 1 | | 4 | | | | 2 | |
| Example 30 | | | | | 4 | | | | 1 | 1 |
| Example 31 | | | | | 2 | | | | 2 | 1 |
| Example 32 | | | | | 4 | | | | 3 | 3 |
| Example 33 | | | | 1 | 4 | | | | 1 | |
| Example 34 | | | | 2 | 5 | | | | 1 | |
| Example 35 | | | | 1 | 4 | | | | 3 | |

### Discoloration Test of TPU (Thermoplastic Polyurethane)

The TPU mixing with the compositions of Examples 14-35 are brought to the test after illuminated for 24 hours. The results are listed in Table VI.

**Table VI**

| | YI before illuminated | YI after illuminated for 24 hr | Variation of YI |
|---|---|---|---|
| Blank | -8.8 | 43.04 | 51.84 |
| Example 14 | -8.02 | 4.05 | 12.07 |
| Example 15 | -8.86 | 2.55 | 11.41 |
| Example 16 | -5.17 | 7.34 | 12.51 |
| Example 17 | -5.08 | 8.71 | 13.79 |
| Example 18 | -4.4 | 7.49 | 11.49 |
| Example 19 | -7.18 | 5.76 | 12.94 |
| Example 20 | -4.59 | 6.56 | 11.15 |
| Example 21 | -7.73 | 5.63 | 13.36 |
| Example 22 | -7.56 | 5.85 | 13.41 |
| Example 23 | -2.39 | 12.87 | 15.26 |
| Example 24 | -2.78 | 14.22 | 17.00 |
| Example 25 | -2.4 | 14.53 | 16.93 |
| Example 26 | -0.95 | 12.86 | 13.81 |
| Example 27 | -1.22 | 14.77 | 15.99 |
| Example 28 | -1.72 | 13.45 | 15.17 |
| Example 29 | -0.77 | 15.31 | 16.08 |
| Example 30 | -2.82 | 15.39 | 18.21 |
| Example 31 | -3.48 | 14.59 | 18.07 |
| Example 32 | -2.19 | 14.96 | 17.15 |
| Example 33 | -2.85 | 11.07 | 13.92 |
| Example 34 | -0.76 | 12.96 | 13.72 |
| Example 35 | -2.81 | 10.99 | 13.80 |

As shown in Table VI, the compositions of Examples 14-35 perform excellent resistance to discoloration after illuminated 24 hours. The YI of the blank specimen is as high as 51.84. However, the YI of the present invention are all less than 19, and even down to 11.15, which further shows the stabilizer composition of the present invention can effectively promote resistance to discoloration cause by light.

From the foregoing description, one skilled in the art can easily ascertain the essential characteristics of this invention, and without departing from the scope thereof, can make various changes and modifications of the invention to adapt it to various usages and conditions. Thus, other embodiments are also within the claims.

## Claims

1. A stabilizer composition for improving discoloration of an organic polymer caused by light; comprising:
(a) 5-90 wt.% UV absorber of foramidine derivative;
(b) 5-90 wt.% UV absorber of benzotriazole derivative; and
(c) 5-90 wt.% antioxidant.

2. The stabilizer composition as claimed in claim 1, wherein said UV absorber of foramidine derivative is a compound of the formula (I): 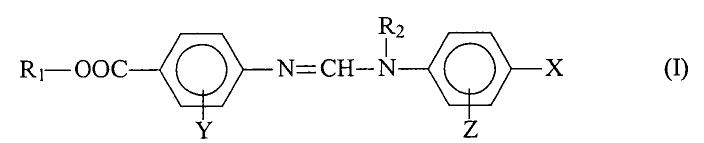 wherein R₁ is alkyl group of C₁-C₅; Y is hydrogen, hydroxyl group, chlorine or alkoxy group; R₂ is phenyl group or alkyl group of C₁-C₉; X is hydrogen, alkoxycarbonyl group, alkoxy group, alkyl group, bis alkyl amine, or halogen; Z is hydrogen, alkoxy group, or halogen.

3. The stabilizer composition as claimed in claim 2, wherein said UV absorber of foramidine derivative is selected from the group consisting of N'-(4-ethoxycarbonylphenyl)-N-methyl-N-phenyl formamidine and N'-(4-ethoxycarbonylphenyl)-N-ethyl-N-phenyl formamidine or a mixture thereof.

4. The stabilizer composition as claimed in claim 1, wherein said UV absorber of benzotriazole derivative is selected from the group consisting of 2-(2'-hydroxy-5'-methylphenyl)benzotriazole, 2-(3',5'-di- tert-butyl-2'-hydroxyphenyl)benzotriazole, 2-(5'-tert-butyl-2'-hydroxy phenyl)benzotriazole, 2-(2'-hydroxy-5'-( 1,1,3,3-tetramethylbutyl) phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl) benzotriazole, 2-(2'-hydroxy-4'-octyloxyphenyl)benzotriazole, 2-(3',5'- di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxy carbonylethyl)phenyl)-5-chloro-benzotriazole, 2-(3'-tert-butyl- 2'-hydroxy-5'-(2-methoxycarbonylethyl)phenyl)benzotriazole, 2-(3'-tert- butyl-2'-hydroxy-5'-(2-octyloxycarbonylethyl)phenyl)benzotriazole, 2-(3'-tert-butyl-5'-[2-(2'-ethylhexyloxy)carbonylethyl]-2'-hydroxyphenyl) benzotriazole, 2-(2H-benzotriazol-2-yl)-6-dodecyl-4-methylphenol, branched and linear, α-[3-[3-(2H-benzotriazol-2-yl)-5-1,1-dimethyl ethyl]-4-hydroxyphenyl]-1-oxopropyl, -ω-hydroxypoly(oxo-1,2- ethanediyl) and α-[3-[3-(2H-benzotriazol-2-yl)-5-1,1-dimethylethyl]-4-hydroxyphenyl]-1-oxopropyl,-ω-[3-[3-(2H-benzotriazol-2-yl)- 5-1,1-dimethylethyl]-4-hydroxyphenyl]-1-oxopropyl, poly(oxy-1,2- ethanediyl) and polyethylene glycol 300, 2-(3'-dodecyl-2'-hydroxy-5'- methylphenyl) benzotriazole, 2-(3'-tert-butyl-2'-hydroxy-5'- (2-isooctyloxy carbonylethyl)phenylbenzotriazole),2,2'-methylene- bis-[4-(1,1,3,3-tetramethylbutyl)-6-benzotriazole-2-ylphenol], 2-[3'-tert- butyl-5'-(2-methoxycarbonylethyl)-2'-hydroxyphenyl]-2H-benzotriazole, polyethylene glycol 300, [R-CH₂CH₂-COO-CH₂CH₂-]2-, wherein R=3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl] benzotriazole, 2-[2'-hydroxy-3'-(1,1,3,3-tetramethylbutyl)-5'-(α,α-dimephenyl)benzotriazole].

5. The stabilizer composition as claimed in claim 4, wherein said UV absorber of benzotriazole derivative is selected from the group consisting of 2-(2'-hydroxy-5'-methylphenyl)-benzotriazole, 2-(2'-hydroxy-5'-(1,1,3,3-tetramethylbutyl)phenyl)benzotriazole, 2-(3',5'-di- tert-amyl-2'-hydroxyphenyl)benzotriazole, 2-(3'-sec-butyl-5'-tert-butyl- 2'-hydroxyphenyl)benzotriazole, [α-[3-[3-(2H-benzotriazol-2-yl)- 5-1,1-dimethylethyl]-4-hydroxyphenyl]-1-oxopropyl]-ω-hydroxypoly (oxo-1,2-ethanediyl) and [α-[3-[3-(2H-benzotriazol-2-yl)-5-1,1- dimethylethyl]-4-hydroxyphenyl]-1-oxopropyl]-ω-[3-[3-(2H- benzotriazol-2-yl)-5-1,1-dimethylethyl]-4-hydroxyphenyl]-1-oxopropyl] poly(oxy-1,2-ethanediyl) and polyethylene glycol 300, 2-(2H- benzotriazol-2-yl)-6-dodecyl-4-methylphenol,branched and linear, or mixtures thereof.

6. The stabilizer composition as claimed in claim 1, wherein said antioxidant is phenol derivatives or phosphorus derivatives.

7. The stabilizer composition as claimed in claim 1, wherein said antioxidant is selected from the group consisting of benzenepropanoic acid, 3,5-bis(1,1-dimethylethyl)-4-hydroxy-,C₇₋₉-branched alkyl esters, 3,9-bis2-[3-(3-t-butyl-4-hydroxy-5-methyl-phenyl)propionyloxy]-1,1-dimethylethyl]-2,4,8,10-tetraoxaspiro[5,5]undecane, 2,6-di-t-butyl-4-methyl phenol, Tri-phenylphosphite, or mixtures thereof.

8. The stabilizer composition as claimed in claim 2, wherein said said UV absorber of foramidine derivative is selected from the group consisting of N'-(4-ethoxycarbonylphenyl)-N-methyl-N-phenyl formamidine.

9. The stabilizer composition as claimed in claim 4, wherein said UV absorber of benzotriazole derivative is selected from the group consisting of 2-(3',5'-di-tert-amyl-2'-hydroxyphenyl)benzotriazole, 2-(2'-hydroxy-5'-methylphenyl)-benzotriazole, and 2-(3'-sec-butyl-5'-tert- butyl-2'-hydroxyphenyl)benzotriazole or mixture thereof.

10. The stabilizer composition as claimed in claim 6, wherein said antioxidant is selected from the group consisting of benzenepropanoic acid, 3,5-bis(1,1-dimethylethyl)-4-hydroxy-, C₇₋₉-branched alkyl esters, Tri-phenyl phosphite, or mixtures thereof.

11. The stabilizer composition as claimed in claim 1, which further comprises at least an additive selected from the group consisting of solvents, other antioxidants, other UV absorbers, other UV stabilizers, metal deactivators, phosphites, phosphates, hydroxylammonium, nitrone, thiosynergists, peroxide cleaner, thermal stabilizers, nucleating agent, fillers, reinforecer, plasticizer, lubricants, emulsifier, paints, dyes, reological additives, fire-retardant, antielectrostatic agent, foaming agent, benzofuranones, and indolinones.

12. The stabilizer composition as claimed in claim 11, wherein said additive is added at 0-50 wt.%.

13. The stabilizer composition as claimed in claim 1, wherein said organic polymer is polyurethane.
